# FASCICULE DE BREVET EUROPEEN

(11) **EP 2 143 928 B1**
(45) Date de publication et mention de la délivrance du brevet: **02.11.2011**
(21) Numéro de dépôt: 09164989.7
(22) Date de dépôt: 09.07.2009
(51) Int. Cl.: F02K 9/52, F02K 9/58, F02K 9/94

(54) **Dispositif d'injection de monoergol à forte modulation du débit**
Einspritzvorrichtung für Monoergol mit starker Durchflussmodulation
Device for injecting monopropellant with high flow modulation

(30) Priorité: 11.07.2008 FR 0854777
(43) Date de publication de la demande: 13.01.2010
(73) Titulaire: SNECMA, 75015 Paris (FR)
(72) Inventeur: Goislot, Hervé, 75002, Paris (FR)
(74) Mandataire: Thévenet, Jean-Bruno

(56) Documents cités:
- US-A- 3 074 231
- US-A- 3 431 733
- US-A- 3 464 633
- US-A- 3 742 701
- US-A- 3 897 008
- US-A- 4 000 613

## Description

### Domaine de l'invention

La présente invention concerne un dispositif d'injection de monoergol liquide à forte modulation de débit avec possibilité d'obturation dans le plan d'injection pour extinction et réallumage, disposé à une extrémité amont de la paroi d'une chambre de combustion d'un moteur-fusée, comprenant un canal d'alimentation en monoergol à partir d'un réservoir.

### Art antérieur

On connaît déjà divers dispositifs d'injection d'ergols liquides pour des moteurs-fusées.

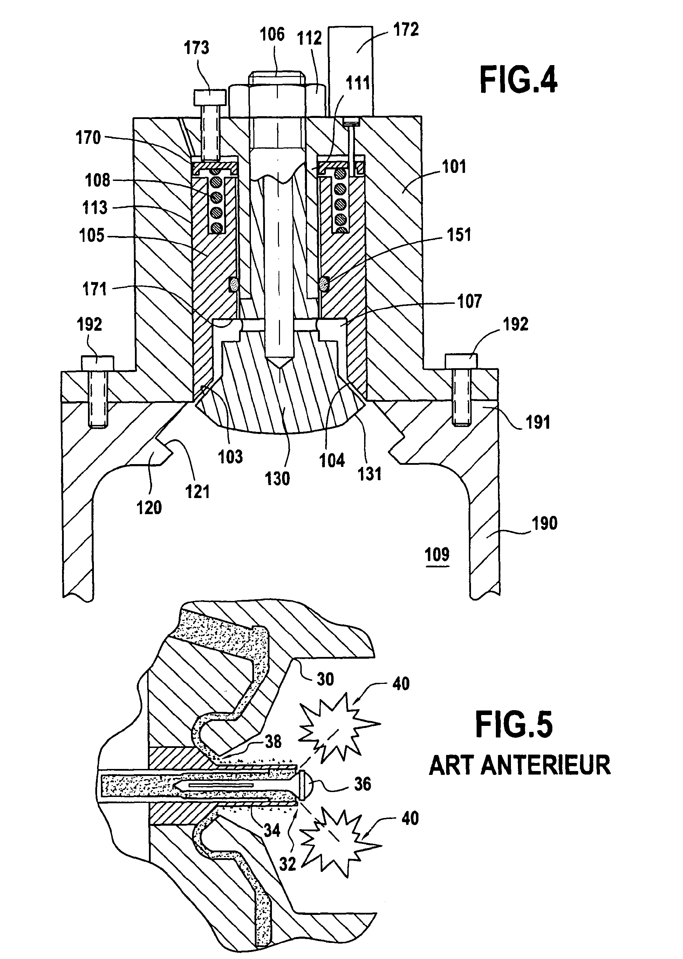

On a représenté à titre d'exemple sur la figure 5 un dispositif du type « pintle » qui permet, pour l'injection en biergol, une forte modulation du débit du fait de la variation des sections d'injection induite par une pièce mobile 34.

Dans le cas du système de la figure 5, un oxydant est injecté dans la chambre de combustion 30 à travers un orifice annulaire 32 entre une pièce mobile 34 et une pièce coaxiale fixe 36. Un combustible est par ailleurs injecté à travers un orifice annulaire 38 autour de la pièce mobile 34, entre celle-ci et une portion de la paroi de la chambre de combustion 30. Le combustible et l'oxydant divergent à partir de leurs orifices de sortie respectifs pour former des jets qui se rencontrent et se mélangent dans une zone de combustion annulaire désignée par la référence 40.

La mise en oeuvre de deux systèmes d'alimentation indépendants pour un combustible et un oxydant rend toutefois la réalisation assez complexe et le dispositif ne peut pas être compact, en particulier dans le cas de l'intégration d'une tige d'obturateur.

D'une manière générale, une conception en biergol avec deux nappes devant se mélanger en partie par friction lors de leur rencontre dans une zone de la chambre de combustion ne permet pas une pulvérisation optimale, notamment dans la phase d'allumage.

Le document de brevet US-A-3 742 701 décrit un dispositif d'injection d'un biergol liquide destiné à réagir avec un ergol solide. La pièce mobile de ce dispositif d'injection est évasée vers l'aval et très sensible à la pression régnant dans la chambre de combustion à laquelle le dispositif d'injection est associé.

Le document de brevet US-A-3 431 733 décrit un système d'injection en deux temps d'un monoergol dans une chambre de combustion comprenant un lit catalytique. Dans un premier temps, le monoergol est introduit par des petits trous ménagés dans un obturateur puis dans un deuxième temps, un passage annulaire est ménagé entre l'obturateur et une paroi de révolution d'un siège mobile sous l'action de la pression créée dans la chambre de combustion.

### Définition et objet de l'invention

La présente invention vise à remédier aux inconvénients précités et à permettre de réaliser un dispositif d'injection compact, qui soit adapté à l'injection de monoergol, présente une conception simplifiée et permette une modulation du débit d'injection tout en assurant une pulvérisation améliorée, et une obturation dans une seule zone (dans le plan d'injection).

Ces buts sont atteints, conformément à l'invention, grâce à un dispositif d'injection de monoergol liquide à forte modulation de débit disposé à une extrémité amont de la paroi d'une chambre de combustion d'un moteur-fusée et comprenant un canal d'alimentation en monoergol à partir d'un réservoir, **caractérisé en ce qu'**il comprend un canal annulaire unique de mise en vitesse relié au canal d'alimentation et débouchant en sortie par une section d'injection annulaire, le canal de mise en vitesse et la section d'injection annulaire étant délimités d'une part par une première paroi de révolution fixe située au niveau de ladite extrémité amont et d'autre part par une deuxième paroi de révolution solidaire d'une pièce mobile en translation par rapport à ladite première paroi de révolution fixe et présentant du côté de la chambre de combustion une extrémité libre constituant un bord fin.

Le dispositif comprend de préférence une troisième paroi de révolution fixe située en regard de la section d'injection annulaire pour recevoir un jet de monoergol liquide projeté à travers la section d'injection annulaire.

Selon un premier mode de réalisation possible, la troisième paroi de révolution fixe est formée sur un embout central relié à l'extrémité amont de la paroi de la chambre de combustion.

Selon un deuxième mode de réalisation possible, la troisième paroi de révolution fixe est formée sur une couronne périphérique reliée à l'extrémité amont de la paroi de la chambre de combustion.

Selon une caractéristique avantageuse de l'invention, la pièce mobile comprend une section pilote soumise aux effets du débit de fluide dans le canal d'alimentation et agissant contre l'action d'un élément élastique dimensionné pour un déplacement de la pièce mobile en position d'ouverture lorsqu'un effort prédéterminé est exercé sur la section pilote.

Toutefois, selon un autre mode de réalisation possible, la pièce mobile est couplée à un actionneur pour un pilotage en force.

La technologie selon l'invention est basée sur l'association d'un système de modulation de débit d'un monoergol et d'une pulvérisation de celui-ci en nappe libre ou par impact sur une paroi fixe, avec en plus une association éventuelle d'un obturateur.

Dans le cas où un élément élastique est utilisé, celui-ci peut être constitué par un ressort calibré ou encore par un ensemble de rondelles Belleville.

Dans le cas du premier mode de réalisation, la première paroi de révolution fixe et la deuxième paroi de révolution solidaire de la pièce mobile sont tronconiques avec une petite base tournée vers la troisième paroi de révolution fixe.

Dans le cas du deuxième mode de réalisation, la première paroi de révolution fixe et la deuxième paroi de révolution solidaire de la pièce mobile sont tronconiques avec une grande base tournée vers la troisième paroi de révolution fixe.

La troisième paroi de révolution fixe est avantageusement tronconique.

Selon une caractéristique particulière de la présente invention, les canaux d'alimentation en monoergol sont définis par un corps en forme de cloche comprenant une couronne d'appui fixée par des vis sur l'extrémité amont de la paroi de la chambre de combustion et une surface de guidage de la pièce mobile, ainsi qu'une surface d'étanchéité sur laquelle coulisse un joint.

La conception du corps par une fabrication en une seule phase de concentricité permet d'assurer une régularité de la nappe sur toute sa périphérie et une obturation quasi parfaite.

Dans le cadre du deuxième mode de réalisation, le dispositif peut comprendre une pièce centrale solidaire de ladite colonne centrale qui définit la première paroi de révolution fixe et comprend en outre une paroi frontale dont une portion située en regard de la troisième paroi de révolution fixe forme un réflecteur pour le jet de monoergol liquide projeté contre la troisième paroi de révolution fixe.

Selon un aspect avantageux de la présente invention, l'élément élastique est constitué par un ressort sur lequel porte une couronne d'appui dont la position est réglée par des vis pour effectuer un réglage en translation de la tension du ressort qui détermine la condition d'ouverture de l'injecteur.

Selon un autre aspect avantageux de l'invention, le dispositif d'injection comprend en outre un capteur de translation de la pièce mobile qui permet de connaître par un simple calcul géométrique la section de passage dans le canal de mise en vitesse.

D'une manière générale, l'invention permet, pour du monoergol, une modulation du débit d'injection, avec un petit débit à l'allumage et une forte variation ensuite, grâce à une section d'injection variable qui permet une vitesse d'injection relativement stable.

L'injection peut être obturée complètement dans le plan d'injection lorsque le débit de monoergol est nul, ce qui évite une combustion dans les cavités de l'injection, des résidus de combustion, voire des explosions compte tenu de la nature de certains ergols.

Le système est simple sur le plan mécanique et très compact, avec un seul canal d'alimentation en ergol.

La pulvérisation s'effectue par projection de l'ergol sur une paroi fixe, ce qui constitue une meilleure pulvérisation que l'impact de deux nappes.

Par ailleurs, le dispositif d'injection est facilement adaptable et l'embout central servant de surface de projection ou de réflexion peut être facilement interchangeable pour adapter la forme ou l'angle de la surface fixe recevant l'impact d'un jet d'ergol. Dans certaines conditions d'injection et d'état du fluide, l'embout peut être supprimé pour un fonctionnement avec une pulvérisation en nappe libre.

Le dispositif selon l'invention est applicable à tout moteur-fusée à forte modulation de poussée (liquide ou hybride) et l'invention concerne également un moteur-fusée équipé du dispositif d'injection de monoergol liquide.

### Brève description des dessins

D'autres caractéristiques et avantages de la présente invention seront mieux compris à la lecture de la description suivante de modes particuliers de réalisation, faite à titre indicatif et non limitatif, en référence aux dessins, sur lesquels :
- la figure 1 est une vue schématique en coupe axiale d'un dispositif d'injection de monoergol selon un premier mode de réalisation de l'invention, à embout central,
- la figure 2 est une vue schématique en coupe axiale d'une variante de réalisation du dispositif d'injection de la figure 1, qui est combiné avec un dispositif de commande d'obturation du col de la chambre de combustion,
- la figure 3 est une vue schématique en coupe axiale d'un dispositif d'injection de monoergol selon un deuxième mode de réalisation de l'invention, avec une paroi fixe périphérique pour recevoir l'impact du jet d'ergol,
- la figure 4 est une vue schématique en coupe axiale d'une variante de réalisation du dispositif d'injection de la figure 3, avec un dispositif de réglage en translation de la tension d'un ressort et un capteur de translation de la pièce mobile modulant le débit d'ergol,
- la figure 5 est une vue schématique en coupe axiale d'un dispositif connu d'injection de biergol muni d'une pièce mobile pour moduler le débit d'injection d'un ergol,
- la figure 6 est une vue schématique en coupe axiale d'une variante de réalisation du dispositif d'injection de la figure 1, cette variante de réalisatiion ne laisant pas partie de la présente invention, et
- la figure 7 est une vue schématique en coupe axiale d'une variante de réalisation du dispositif d'injection de la figure 3.

### Description détaillée de modes de réalisation préférentiels

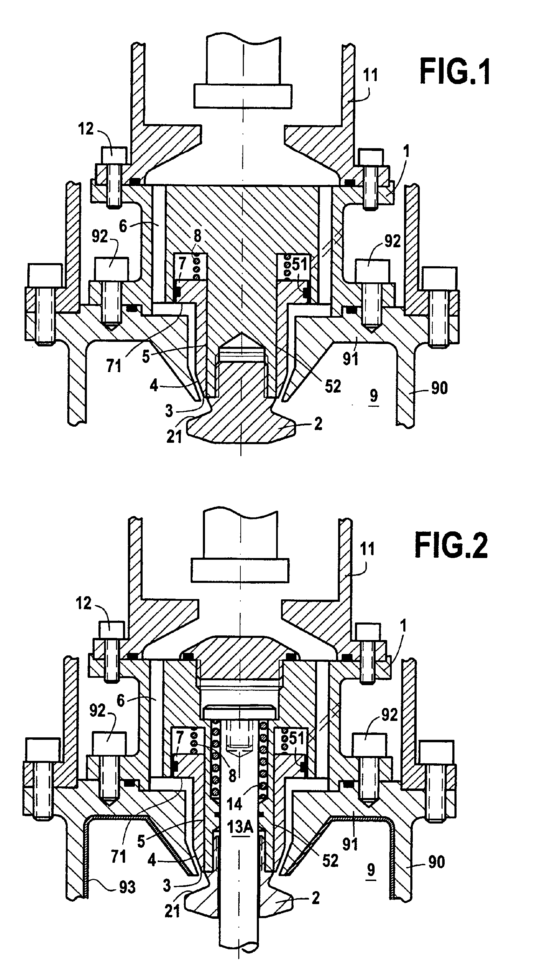

Si l'on se réfère à la figure 1, on voit une représentation schématique en coupe longitudinale d'un premier exemple de dispositif d'injection de monoergol selon l'invention.

Sur la figure 1, on a représenté partiellement une chambre de combustion 9 délimitée par une paroi 90 dont une extrémité avant est repérée par la référence 91.

Un corps 1 en forme de cloche comporte une base en forme de couronne qui est fixée sur la paroi de fond 91 par des éléments de liaison 92 tels que des vis. Le corps 1 définit des trous 6 d'alimentation d'ergol liquide qui sont juxtaposés sur une couronne et en communication avec un réservoir à travers un espace défini par un deuxième corps 11 fixé par des vis ou boulons 12 sur le corps en cloche 1.

Un embout 2 solidaire du corps en cloche 1 est disposé dans la chambre de combustion 9, et présente une surface de révolution fixe 21, par exemple tronconique, qui est située à faible distance en regard d'une section 3 d'injection d'ergol qui est en communication, par un tronçon annulaire 4 de mise en vitesse, avec les trous 6 d'alimentation d'injection.

Une pièce mobile 5 qui présente une symétrie de révolution est coaxiale au corps 1 et guidée par rapport à cette dernière selon une surface de guidage 52 longue. La pièce mobile 5 comporte une portion de tête 7 de diamètre plus important, qui définit une surface d'implantation pour le joint 51 qui forme une étanchéité avec le corps 1.

Une face 71 de la portion de tête 7 de la pièce mobile 5 définit une section pilote soumise aux variations de débit d'ergol circulant dans les trous d'alimentation 6, ces variations de débit évoluant sensiblement comme la pression.

La face arrière de la portion de tête 7 de la pièce mobile 5 est soumise à l'action d'un élément élastique tel qu'un ressort 8 qui est interposé entre le corps fixe 1 et la pièce mobile 5.

Le ressort 8 est dimensionné de manière à pousser la pièce mobile 5 en position de fermeture de la section 3 d'injection d'ergol dans le plan de sortie de l'injecteur lorsque le débit de monoergol est nul, et à provoquer l'ouverture de cette section 3 d'injection d'ergol lorsque le débit d'ergol agissant sur la section pilote 71 produit un effet prédéterminé sur le ressort 8.

La pièce mobile 5 comprend une partie terminale voisine de l'embout 2 qui est de forme tronconique et coopère avec une paroi fixe également tronconique formée par une portion de la paroi de fond 91 qui est en saillie dans la chambre 9, pour délimiter le canal de mise en vitesse 4 débouchant dans la chambre de combustion 9 par la section d'injection 3 située en regard de la paroi tronconique et de l'embout 2.

A la sortie de l'injecteur, le monoergol liquide se pulvérise sur la paroi 21 de l'embout 2.

Les parois tronconiques délimitant le canal 4 de mise en vitesse présentent leur petite base tournée du côté de l'embout 2. Sur l'exemple de la figure 1, la paroi tronconique 21 de l'embout 2 présente sa petite base du côté le plus rapproché de la section d'injection 3, mais la paroi fixe 21 peut présenter d'autres configurations adaptées à la nature de l'ergol et/ou des conditions de fonctionnement. L'embout 2 définissant la surface de projection 21, qui est démontable, confère une modularité qui permet une adaptation de la forme et de l'angle d'inclinaison de la surface de projection 21 en fonction du type d'impact souhaité.

Le dispositif d'injection selon l'invention adapté à un monoergol comprend un seul canal 4 de mise en vitesse et assure une pulvérisation de l'ergol par projection sur une paroi fixe 21, ce qui contribue à définir un dispositif dont la compacité et la capacité de pulvérisation sont améliorées.

L'architecture mécanique est à même de garantir une très grande précision dans la réalisation et à conférer une excellente fiabilité du dispositif d'injection.

Le corps 1 en forme de cloche avec colonne de guidage au centre peut être usiné en une seule phase (voir la variante de réalisation de la figure 2). Ce concept permet, compte tenu de l'hyperstaticité du système, de garantir une bonne concentricité pour assurer à la fois :
- un guidage long de la pièce mobile 5 le long de la surface 52,
- l'étanchéité avec la surface extérieure de la pièce mobile 5 au niveau du joint 51,
- le centrage du corps 1 par son appui plan sur la plaque de fond 91 de la paroi 90 de la chambre de combustion 9, la plaque de fond définissant par sa portion en saillie la paroi fixe qui coopère avec la paroi mobile de la pièce mobile 5 pour définir le canal 4 de mise en vitesse.

Le fait de minimiser l'empilage des pièces et de réaliser l'usinage de cylindres longs dans une même phase est une garantie du bon fonctionnement, en particulier sur la régularité de la nappe injectée et le contact des surfaces à l'obturation.

Par ailleurs, du côté de la chambre de combustion 9 la pièce mobile 5 se termine par une extrémité libre en forme de pointe fine pour minimiser les effets de la pression de la chambre 9 sur le ressort 8, ou les rondelles Belleville qui peuvent être substituées au ressort 8.

La figure 2 montre une variante de réalisation du dispositif d'injection de la figure 1 adaptée au cas où une tige centrale 13A est mobile axialement sous l'action d'un ressort 14 et peut servir par exemple à commander l'obturation sélective du col de la chambre de combustion 9. Dans ce cas, le corps 1 en forme de cloche comprend lui-même, formée d'une seule pièce avec le corps 1, une partie tubulaire centrale qui est interposée entre la pièce mobile 5 et la tige centrale 13A pour assurer à la fois un guidage long de la pièce mobile 5 et un centrage court de la tige centrale mobile 13A par rapport au corps fixe 1. Un autre centrage court de la tige centrale mobile 13A est situé en amont du col de la chambre de combustion 9.

Le fonctionnement de la variante de la figure 2 est par ailleurs analogue à celui du mode de réalisation de la figure 1 et la description des éléments communs, qui portent les mêmes références, ne sera pas répétée.

On a représenté sur la figure 2 un revêtement 93 de protection de la face interne de la paroi 90 de la chambre de combustion, lequel revêtement pourrait également être formé dans le cas des autres modes de réalisation décrits.

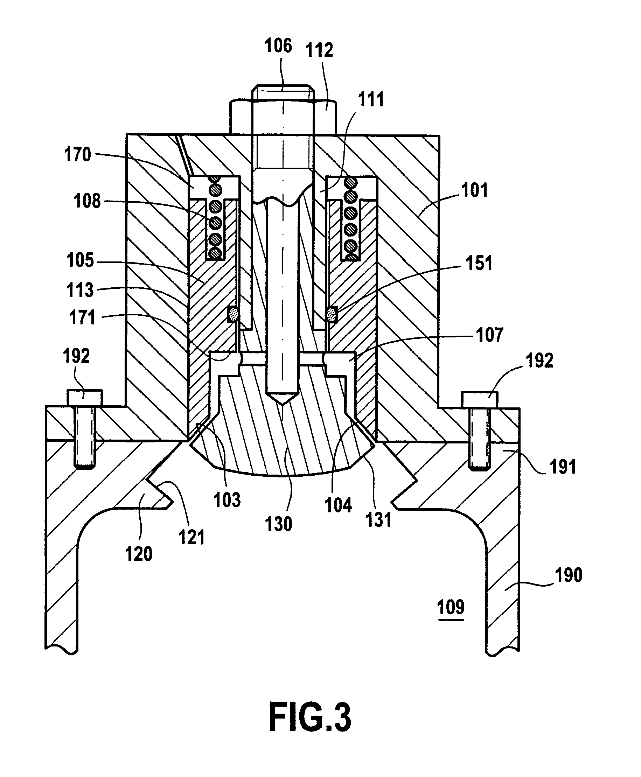

Les figures 3 et 4 montrent un deuxième mode de réalisation de l'invention qui repose sur les mêmes principes que le premier mode de réalisation des figures 1 et 2, mais dans lequel la paroi fixe recevant les impacts de jets de monoergol n'est pas formée sur un embout central mais est formée sur une partie en saillie 120 de la paroi de fond 191 de la paroi 190 délimitant la chambre de combustion 109.

Les jets de monoergol issus de la section d'injection 103 et mis en vitesse dans un canal de mise en vitesse 104 ne sont pas projetés de façon convergente comme selon le mode de réalisation des figures 1 et 2, mais de façon divergente de façon à frapper la paroi périphérique 121, et être pulvérisés.

Comme dans le premier mode de réalisation, un corps 101 en forme de cloche comprend une embase supportée sur la paroi de fond 191 et fixée sur celle-ci par des moyens de liaison 192.

Le corps 101 comporte une partie tubulaire centrale 111 qui d'une part amène une pièce tubulaire centrale délimitant un canal central 106 d'alimentation en monoergol, et d'autre part sert de surface d'étanchéité pour le joint 151 monté sur la pièce mobile 105 dont la partie terminale coopère avec une pièce fixe 130 de centrage pour délimiter le canal annulaire 104 de mise en vitesse et la section de sortie annulaire 103 pour le monoergol liquide. Le joint 151 joue également un rôle d'amortisseur pour éviter les oscillations.

La pièce tubulaire centrale délimitant le canal central 106 d'alimentation en monoergol peut être fixée sur le corps 101 par un écrou 112.

La pièce mobile 105, qui est guidée par la surface interne 113 de la cloche présente une section pilote 171 soumise aux variations de débit du monoergol dans la partie annulaire 107 du canal d'alimentation 106.

Un ressort 108 est interposé entre la pièce mobile 105 et une partie supérieure du corps 101 pour maintenir la section de sortie 103 obstruée lorsque le débit d'ergol est nul et provoquer l'ouverture de celle-ci pour un effort prédéterminé exercé par le débit de monoergol sur la surface pilote 171.

La pièce fixe de centrage 130 comprend une paroi périphérique fixe tronconique située en regard d'une paroi terminale tronconique de la pièce mobile 105 pour délimiter le canal de mise en vitesse 104. La grande base des portions tronconiques est tournée sur la paroi fixe 121 de telle sorte que les jets d'ergol sont divergents.

Après injection à travers la section de sortie 103 et pulvérisation par impact sur la paroi fixe 121, des projections d'ergol peuvent être présentes sur la paroi périphérique frontale 131 de la pièce fixe de centrage 150.

Les gouttes de pulvérisation initialement formées par impact de l'ergol sur la paroi fixe périphérique tronconique 121 sont redirigées vers le centre après réflexion par la paroi périphérique frontale 131.

Comme dans le cas du premier mode de réalisation, l'injection de monoergol à débit modulable et vitesse d'injection stable provoque une pulvérisation de l'ergol par impact sur une paroi fixe avec un système mécanique simple et compact.

Le corps 101 en cloche avec colonne 111 au centre peut être usiné en une seule phase. Cette façon de faire permet, compte tenu de l'hyperstaticité du système, de garantir une bonne concentricité pour assurer à la fois le guidage long de la pièce mobile 105 avec sa surface périphérique extérieure, l'étanchéité avec le joint 151 par rapport à la surface intérieure de la pièce mobile 105 et le centrage court, avec appui plan, du corps 101 sur la plaque 191 de fond de chambre afin de bien centrer la surface d'impacts 121.

Le fait de minimiser l'empilage des pièces et de réaliser l'usinage de cylindres longs dans une même phase est une garantie pour assurer la régularité de la nappe injectée et le contact des surfaces à l'obturation.

Comme dans le premier mode de réalisation, la pointe de la pièce mobile 105 est fine pour minimiser les effets de la pression de la chambre 109 sur le ressort 108, ou des rondelles Belleville qui peuvent être substituées au ressort 108.

On a représenté sur la figure 4 une variante de réalisation dans laquelle une couronne 170 est disposée sur le ressort 108 et est maintenue appliquée contre le ressort 108 par des vis 173 (par exemple six vis disposées à 60° les unes des autres). Ceci permet de régler en translation la tension du ressort 108 par l'intermédiaire de la couronne 170. Cette tension détermine la condition d'ouverture de l'injecteur. Des essais et des réglages peuvent être effectués par exemple avec de l'eau.

De façon optionnelle, un capteur de translation 172 agissant sur la partie arrière de la pièce mobile 105 qui est soumise à l'action du ressort 108 permet de connaître par simple calcul géométrique la section de passage dans le canal de mise en vitesse 104. On dispose alors d'un système régulé qui contrôle au mieux la vitesse d'injection.

Les éléments de réglage et de régulation 170, 171, 172 peuvent aussi être mis en oeuvre avec le premier mode de réalisation des figures 1 et 2 en agissant sur le ressort 8 et la pièce mobile 5.

Dans certaines conditions d'injection et d'état du fluide, la partie en saillie 20 ; 120 avec la surface 21 ; 121 peut être supprimée pour un fonctionnement avec une pulvérisation en nappe libre.

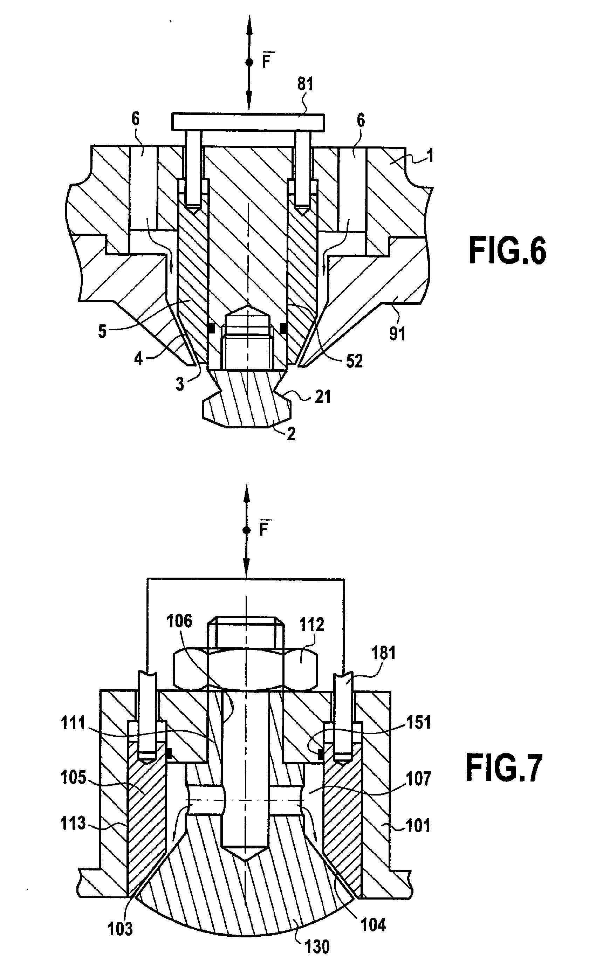

Par ailleurs, de façon optionnelle, la section pilote 71 ; 171 et le ressort 8 ; 108 peuvent être supprimés. Dans ces variantes de réalisation des figures 1 et 3, qui ont été représentées sur les figures 6 et 7 respectivement, la pièce mobile 5 ; 105 est couplée à un actionneur 81 ; 181 qui peut être par exemple de type mécanique, hydraulique ou électrique pour un pilotage en force. Sur les dessins, on a représenté essentiellement les tiges de commande de l'actionneur qui sont engagées dans des orifices ménagés dans le corps 1 ; 101.

Dans le cas de la variante de la figure 7, l'écrou 112 pourrait être supprimé et les pièces 101 et 130 pourraient être solidarisées par soudage, ce qui permet de dégager de la place pour l'implantation de l'actionneur 181. Dans ce cas, l'alimentation en ergol peut s'effectuer non pas par un canal central 106 mais par un tore alimentant un ensemble de perçages formés dans la pièce 101, comme dans la variante de réalisation de la figure 6.

Dans la présente description, de façon classique, on entend par organe de centrage court un organe définissant une zone de contact qui peut se modéliser comme une liaison sphère-cylindre.

Si la longueur de la zone de contact est L et si le diamètre de l'organe de centrage court est D, on a une relation du type L ≤ 0,8D.

De préférence, on peut choisir la valeur de la longueur L de la zone de contact dans la plage de valeurs suivantes : 0,1D ≤ L ≤ 0,5D.

De façon encore plus préférentielle on peut choisir la valeur de la longueur L de la zone de contact dans la plage de valeurs suivantes : 0,1D ≤ L ≤ 0,3D.

Par ailleurs, également de façon classique, on entend par organe de centrage long un organe définissant une zone de contact qui peut se modéliser comme une liaison à pivot glissant.

Si la longueur de la zone de contact est L et si le diamètre de l'organe de centrage long est D, on a une relation du type D ≤ L.

De préférence, on peut choisir la valeur de la longueur L de la zone de contact dans la plage de valeurs suivantes : 1,5D ≤ L.

## Revendications

1. Dispositif d'injection de monoergol liquide à forte modulation de débit disposé à une extrémité amont (91 ; 191) de la paroi (90 ; 190) d'une chambre de combustion (9 ; 109) d'un moteur-fusée et comprenant un canal d'alimentation (6 ; 106) en monoergol à partir d'un réservoir,
**caractérisé en ce qu'**il comprend un canal annulaire unique (4 ; 104) de mise en vitesse relié au canal d'alimentation (6 ; 106) et débouchant en sortie par une section d'injection annulaire (3 ; 103), le canal de mise en vitesse (4 ; 104) et la section d'injection annulaire (3, 103) étant délimités d'une part par une première paroi de révolution fixe située au niveau de ladite extrémité amont (91 ; 191) et d'autre part par une deuxième paroi de révolution solidaire d'une pièce (5 ; 105) mobile en translation par rapport à ladite première paroi de révolution fixe et présentant du côté de la chambre de combustion 9 ; 109) une extrémité libre constituant un bord fin.

2. Dispositif selon la revendication 1, **caractérisé en ce qu'**il comprend une troisième paroi de révolution fixe (21 ; 121) située en regard de la section d'injection annulaire (3, 103) pour recevoir un jet de monoergol liquide projeté à travers la section d'injection annulaire (3 ; 103).

3. Dispositif selon la revendication 2, **caractérisé en ce que** la troisième paroi de révolution fixe (21) est formée sur un embout central relié à l'extrémité amont (91) de la paroi (90) de la chambre de combustion (9).

4. Dispositif selon la revendication 2, **caractérisé en ce que** la troisième paroi de révolution fixe (121) est formée sur une couronne périphérique reliée à l'extrémité amont (191) de la paroi (190) de la chambre de combustion (109).

5. Dispositif selon l'une quelconque des revendications 1 à 4, **caractérisé en ce que** la pièce mobile (5 ; 105) comprend une section pilote (71 ; 171) soumise aux effets du débit de fluide dans le canal d'alimentation (6 ; 106) et agissant contre l'action d'un élément élastique (8 ; 108) dimensionné pour un déplacement de la pièce mobile (5 ; 105) en position d'ouverture lorsqu'un effort prédéterminé est exercé sur la section pilote (71 ; 171).

6. Dispositif selon la revendication 5, **caractérisé en ce que** l'élément élastique est constitué par un ressort calibré ou par un ensemble de rondelles Belleville.

7. Dispositif selon la revendication 3 et la revendication 5, **caractérisé en ce que** la première paroi de révolution fixe et la deuxième paroi de révolution solidaire de la pièce mobile (5) sont tronconiques avec une petite base tournée vers la troisième paroi de révolution fixe (21).

8. Dispositif selon la revendication 4 et la revendication 5, **caractérisé en ce que** la première paroi de révolution fixe et la deuxième paroi de révolution solidaire de la pièce mobile (105) sont tronconiques avec une grande base tournée vers la troisième paroi de révolution fixe (121).

9. Dispositif selon l'une quelconque des revendications 2 à 4 et 7, 8, **caractérisé en ce que** la troisième paroi de révolution fixe (21 ; 121) est tronconique.

10. Dispositif selon l'une quelconque des revendications 1 à 9, **caractérisé en ce que** les canaux (6 ; 106) d'alimentation en monoergol sont définis par un corps (1 ; 101) en forme de cloche comprenant une couronne d'appui fixée par des vis (92 ; 192) sur l'extrémité amont (91 ; 191) de la paroi (90 ; 190) de la chambre de combustion (9 ; 109) et une surface de guidage de la pièce mobile (52 ; 113), ainsi qu'une surface d'étanchéité sur laquelle coulisse un joint (51 ; 151).

11. Dispositif selon la revendication 4 et la revendication 10, **caractérisé en ce qu'**il comprend une pièce centrale (130) solidaire de ladite colonne centrale qui définit la première paroi de révolution fixe et comprend en outre une paroi frontale dont une portion (131) située en regard de la troisième paroi de révolution fixe (121) forme un réflecteur pour le jet de monoergol liquide projeté contre la troisième paroi de révolution fixe (121).

12. Dispositif selon la revendication 5, **caractérisé en ce que** l'élément élastique (108) est constitué par un ressort sur lequel porte une couronne d'appui (170) dont la position est réglée par des vis (171) pour effectuer un réglage en translation de la tension du ressort (108) qui déterminé la condition d'ouverture de l'injecteur.

13. Dispositif selon l'une quelconque des revendications 1 à 12, **caractérisé en ce qu'**il comprend en outre un capteur (172) de translation de la pièce mobile (105) qui permet de connaître par un simple calcul géométrique la section de passage dans le canal (104) de mise en vitesse.

14. Dispositif selon la revendication 1, **caractérisé en ce que** la pièce (5 ; 105) mobile en translation est couplée à un actionneur.

15. Dispositif selon la revendication 11, **caractérisé en ce que** le diamètre externe de la pièce mobile (105) au niveau dudit bord aigu à angle vif est sensiblement égal au diamètre externe maximum de ladite pièce centrale fixe (130).

## Claims

1. A device for injecting a liquid mono-propellant with a large amount of flow rate modulation, the device being disposed at the upstream end (91; 191) of the wall (90; 190) of a combustion chamber (9; 109) of a rocket engine and including a channel (6; 106) for feeding it with a mono-propellant from a tank,
**Characterized in that** it comprises a single annular speed-up channel (4; 104) connected to the feed channel (6; 106) and having its outlet opening out via an annular injection section (3; 103), the speed-up channel (4; 104) and the annular injection section (3; 103) being defined firstly by a first wall forming a stationary surface of revolution situated level with said upstream end (91; 191), and secondly by a second wall forming a surface of revolution integral with a part (5; 105) that is movable in translation relative to said first wall forming a stationary surface of revolution and presenting beside the combustion chamber (9; 109) a free end that constitutes a fine edge.

2. A device according to claim 1, **Characterized in that** it comprises a third wall (21; 121) forming a stationary surface of revolution situated facing the annular injection section (3; 103) to receive a jet of the liquid mono-propellant projected through the annular injection section (3; 103).

3. A device according to claim 2, **Characterized in that** the third wall (21) constituting a stationary surface of revolution is formed on a central endpiece connected to the upstream end (91) of the wall (90) of the combustion chamber (9).

4. A device according to claim 2, **Characterized in that** the third wall (121) constituting a stationary surface of revolution is formed on a peripheral ring connected to the upstream end (191) of the wall (190) of the combustion chamber (109).

5. A device according to anyone of claims 1 to 4, **Characterized in that** the movable part (5; 105) has a pilot section (71; 171) that is subjected to the effects of the fluid flow rate in the feed channel (6; 106) and that acts against the action of a resilient element (8; 108) dimensioned to enable the movable part (5; 105) to move into an open position when a predetermined force is exerted on the pilot section (71; 171).

6. A device according to claim 5, **Characterized in that** the resilient element is constituted by a calibrated spring or by a set of spring washers.

7. A device according to claim 3 and claim 5, **Characterized in that** the first wall constituting a stationary surface of revolution and the second wall constituting a surface of revolution integral with the movable part (5) are frustoconical with their small bases facing towards the third wall (21) constituting a stationary surface of revolution.

8. A device according to claim 4 and claim 5, **Characterized in that** the first wall constituting a stationary surface of revolution and the second wall forming a surface of revolution integral with the movable part (105) are frustoconical with their large bases facing towards the third wall (121) constituting a stationary surface of revolution.

9. A device according to anyone of claims 2 to 4, and 7, 8, **Characterized in that** the third wall (21; 121) constituting a stationary surface of revolution is frustoconical.

10. A device according to anyone of claims 1 to 9, **Characterized in that** the mono-propellant feed channels (6; 106) are defined by a bell-shaped body (1; 101) having: a bearing flange fastened by bolts (92; 192) to the upstream end (91; 191) of the wall (90; 190) of the combustion chamber (9; 109); and a guide surface for the movable part (52; 113); and also a sealing surface against which a gasket (51; 151) slides.

11. A device according to claim 4 and claim 10, **Characterized in that** includes a central part (130) secured to said central column that defines the first wall constituting a stationary surface of revolution and that further includes a front wall with a portion (131) situated facing the third wall (121) constituting a stationary surface of revolution, which portion forms a reflector for the jet of liquid mono-propellant projected against the third wall (121) constituting a stationary surface of revolution.

12. A device according to claim 5, **Characterized in that** the resilient element (108) is constituted by a spring against which a bearing ring bears (170), having a position that is adjusted by screws (173) for adjusting in translation the tension of the spring (108) that determines the opening condition for the injector.

13. A device according to anyone of claims 1 to 12, **Characterized in that** it further comprises a sensor (172) for sensing movement in translation of the movable part (105) that serves to determine by simple geometrical calculation the flow section through the speed-up channel (104).

14. A device according to claim 1, **Characterized in that** the part (5; 105) that is movable in translation is coupled to an actuator.

15. A device according to claim 11, **characterized in that** the external diameter of the movable part (105) is substantially equal to the maximum external diameter of said stationary central part (130) at the level of said fine edge with sharp angle.

## Patentansprüche

1. Vorrichtung zum Einspritzen von flüssigem Monergol mit hoher Modulation der Durchflußmenge, die an einem stromaufwärtigen Ende (91; 191) der Wand (90; 190) einer Brennkammer (9; 109) eines Raketentriebwerks angeordnet ist und einen Kanal zum Zuführen (6; 106) von Monergol aus einem Behälter umfaßt,
**dadurch gekennzeichnet, daß** sie einen einzigen ringförmigen Beschleunigungskanal (4; 104) umfaßt, der mit dem Zuführkanal (6; 106) verbunden ist und der ausgangseitig über einen ringförmigen Einspritzquerschnitt (3; 103) ausmündet, wobei der Beschleunigungskanal (4; 104) und der ringförmige Einspritzquerschnitt (3; 103) einerseits durch eine feste erste Rotationswand, die im Bereich des stromaufwärtigen Endes (91; 191) gelegen ist, und andererseits durch eine zweite Rotationswand begrenzt sind, die mit einem Teil (5; 105) fest verbunden ist, das gegenüber der festen ersten Rotationswand verschiebebeweglich ist und das auf der Seite der Brennkammer (9; 109) ein freies Ende aufweist, welches einen feinen Rand bildet.

2. Vorrichtung nach Anspruch 1, **dadurch gekennzeichnet, daß** sie eine feste dritte Rotationswand (21; 121) umfaßt, welche gegenüber dem ringförmigen Einspritzquerschnitt (3, 103) gelegen ist, um einen durch den ringförmigen Einspritzquerschnitt (3; 103) gespritzten Flüssigmonergolstrahl aufzunehmen.

3. Vorrichtung nach Anspruch 2, **dadurch gekennzeichnet, daß** die feste dritte Rotationswand (21) an einem mittleren Ansatz, der mit dem stromaufwärtigen Ende (91) der Wand (90) der Brennkammer (9) verbunden ist, ausgebildet ist.

4. Vorrichtung nach Anspruch 2, **dadurch gekennzeichnet, daß** die feste dritte Rotationswand (121) an einem Umfangskranz der mit dem stromaufwärtigen Ende (191) der Wand (190) der Brennkammer (109) verbunden ist, ausgebildet ist.

5. Vorrichtung nach einem der Ansprüche 1 bis 4, **dadurch gekennzeichnet, daß** das bewegliche Teil (5; 105) einen Steuerabschnitt (71; 171) umfaßt, der den Wirkungen des Fluiddurchflusses in dem Zuführkanal (6; 106) ausgesetzt ist und der gegen die Wirkung eines elastischen Elements (8; 108) wirkt, das dimensioniert ist, um das bewegliche Teil (5; 105) in die Öffnungsstellung zu bewegen, wenn auf den Steuerabschnitt (71; 171) eine vorbestimmte Kraft ausgeübt wird.

6. Vorrichtung nach Anspruch 5, **dadurch gekennzeichnet, daß** das elastische Element von einer kalibrierten Feder oder von einer Tellerfederanordnung gebildet ist.

7. Vorrichtung nach Anspruch 3 und Anspruch 5, **dadurch gekennzeichnet, daß** die feste erste Rotationswand und die mit dem beweglichen Teil (5) fest verbundene zweite Rotationswand kegelstumpfförmig sind, mit einer der festen dritten Rotationswand (21) zugewandten kleinen Basis.

8. Vorrichtung nach Anspruch 4 und Anspruch 5, **dadurch gekennzeichnet, daß** die feste erste Rotationswand und die mit dem beweglichen Teil (105) fest verbundene zweite Rotationswand kegelstumpfförmig sind, mit einer der festen dritten Rotationswand (121) zugewandten großen Basis.

9. Vorrichtung nach einem der Ansprüche 2 bis 4 und 7, 8, **dadurch gekennzeichnet, daß** die feste dritte Rotationswand (21; 121) kegelstumpfförmig ist.

10. Vorrichtung nach einem der Ansprüche 1 bis 9, **dadurch gekennzeichnet, daß** die Kanäle (6; 106) zum Zuführen von Monergol durch einen glockenförmigen Körper (1; 101) definiert sind, der einen Anlagekranz, welcher durch Schrauben (92; 192) an dem stromaufwärtigen Ende (91; 191) der Wand (90; 190) der Brennkammer (9; 109) befestigt ist, und eine Fläche zur Führung des beweglichen Teils (52; 113) sowie eine Dichtungsfläche, an der eine Dichtung (51; 151) gleitet, aufweist.

11. Vorrichtung nach Anspruch 4 und Anspruch 10, **dadurch gekennzeichnet, daß** sie einen mit der mittleren Säule fest verbundenen mittleren Teil (130) umfaßt, der die feste erste Rotationswand definiert und der ferner eine stirnseitige Wand umfaßt, von der ein gegenüber der festen dritten Rotationswand (121) gelegener Abschnitt (131) einen Reflektor für den gegen die feste dritte Rotationswand (121) gespritzten Flüssigmonergolstrahl bildet.

12. Vorrichtung nach Anspruch 5, **dadurch gekennzeichnet, daß** das elastische Element (108) von einer Feder gebildet ist, auf der ein Anlagekranz (170) angeordnet ist, dessen Position mittels Schrauben (173) eingestellt wird, um eine translatorische Einstellung der Spannung der Feder (108) zu bewirken, die die Öffnungsbedingung der Einspritzdüse bestimmt.

13. Vorrichtung nach einem der Ansprüche 1 bis 12, **dadurch gekennzeichnet, daß** sie ferner einen Sensor (172) für die Verschiebung des beweglichen Teils (105) umfaßt, der ermöglicht, mit Hilfe einer einfachen geometrischen Berechnung den Durchlaßquerschnitt in dem Beschleunigungskanal (104) zu kennen.

14. Vorrichtung nach Anspruch 1, **dadurch gekennzeichnet, daß** das verschiebebewegliche Teil (5; 105) mit einem Stellantrieb gekoppelt ist.

15. Vorrichtung nach Anspruch 11, **dadurch gekennzeichnet, daß** der Außendurchmesser des beweglichen Teils (105) im Bereich des spitzen, scharfkantigen Randes im wesentlichen gleich dem maximalen Außendurchmesser des festen mittleren Teils (130) ist.
